# FASCICULE DE BREVET EUROPEEN

(11) **EP 3 898 019 B1**
(45) Date de publication et mention de la délivrance du brevet: **25.11.2026**
(21) Numéro de dépôt: 19870043.7
(22) Date de dépôt: 06.12.2019
(51) Int. Cl.: B09B 3/00, B09B 5/00, B29B 13/00, B29B 17/00, B29C 43/00, B29C 67/04, B29D 30/06

(54) **PROCEDE DE FABRICATION D'OBJETS EN POUDRETTE DE CAOUTCHOUC**
HERSTELLUNGSVERFAHREN FÜR OBJEKTE AUS KAUTSHUKMEHL
METHOD FOR MANUFACTURING ARTICLES FROM POWDERED RUBBER

(30) Priorité: 19.12.2018 FR 1873362; 01.02.2019 FR 1900986
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: PIALOT, Frédéric, 63040 Clermont-Ferrand Cedex 9 (FR); MERINO LOPEZ, José, 63040 Clermont-Ferrand Cedex 9 (FR)
(74) Mandataire: M.F.P. Michelin
(86) Numéro de dépôt international: PCT/FR2019/052956
(87) Numéro de publication internationale: WO 2020/128213

(56) Documents cités:
- WO-A1-2017/097859
- FR-A1- 2 475 458

## Description

La présente invention concerne la fabrication d'objets nouveaux à partir de la poudrette de caoutchouc récupérée des pneumatiques usagés.

Actuellement on se pose de plus en plus la question du recyclage des pneumatiques en fin de vie. Le besoin qui est ressenti plus particulièrement est la capacité de réutilisation de la matière des composants ou, autrement dit, du retraitement en vue d'une valorisation de tout ou partie de la matière qui constitue un pneumatique usagé.

Lorsque l'on veut valoriser les pneumatiques usagés, on les broie. Le broyage s'effectue dans une machine munie de puissantes lames de déchiquetage rotatives aptes à broyer des pneus de tailles et types différents. Les broyats obtenus ou, autrement dit, les morceaux de pneus usagés cisaillés, ont des tailles différentes comprises généralement entre 25 et 350mm et une composition moyenne identique à celle du pneu entier d'origine.

Afin de valoriser la matière qui les compose, les broyats sont traités dans un granulateur où ils sont broyés plus finement pour en obtenir des granulats. Les granulats proviennent d'un broyage très fin de la gomme comprise dans les morceaux de pneus usagés, généralement après extraction des fibres textiles et des fils métalliques contenus dans les pneus. Les granulats ainsi obtenus ont une taille comprise entre 0,8 et 20mm et sont constitués d'au moins 50% de caoutchouc. Les granulats peuvent ensuite être broyés plus finement et séchés pour obtenir de la poudrette de caoutchouc. Les poudrettes de caoutchouc sont des particules issues du déchiquetage et du broyage des pneus usagés, l'acier en est extrait ainsi que le textile, et ont une taille moyenne (D50) comprise entre 100µm et 800µm.

Les granulats mélangés à des liants ou des résines sont utilisés dans la fabrication d'objets moulés, notamment dans le domaine du mobilier urbain ou dans celui des articles utilisés pour l'aménagement des voies routières. De manière similaire, lorsqu'on rajoute à la poudrette un agent de vulcanisation et on les mixe ensemble dans des malaxeurs, on peut obtenir, par vulcanisation en presse, des objets moulés tels des bandages de roues pour des conteneurs, brouettes, nettoyeurs à haute pression, etc.

Le document FR 2 475 458 décrit un procédé de fabrication d'articles en caoutchouc récupéré qui consiste à déposer dans un moule de la poudrette mélangée de préférence à un agent vulcanisant, seul ou en mélange avec un accélérateur. La poudrette selon ce document a une taille supérieure ou égale à 900 microns et elle est déposée seule ou en mélange dans un moule en étant soumise à une température comprise entre 160°C et 190°C et une pression allant jusqu'à 500 bars pendant un certain laps de temps. Les additifs ajoutés à la poudrette permettent, en fonction de leur proportion, d'ajuster la rigidité des articles ainsi obtenus et surtout d'augmenter la résistance à la rupture en traction et l'allongement des articles obtenus à base de poudrette vulcanisée. Les objets obtenus ont une densité similaire à celle du caoutchouc vulcanisé.

Un objectif de l'invention est de remédier aux inconvénients des documents précités et d'apporter une solution originale permettant d'obtenir de nouveaux objets à partir de poudrette de caoutchouc récupéré, objets dont les propriétés physiques sont très différentes de celles du caoutchouc vulcanisé.

Cet objectif est atteint par l'invention qui propose un procédé de fabrication d'objet en poudrette de caoutchouc récupéré, caractérisé en ce que :
a) on mélange des particules de poudrette avec des particules d'un soluté ;
b) on réalise un objet moulé par frittage du mélange de l'étape a) seul dans un moule dans des conditions de température et de pression prédéterminées.

Autrement dit, on réalise un objet par frittage d'un mélange de particules de poudrette de caoutchouc et des particules solides d'un produit pulvérulent de type soluté, particules qui ont la propriété de se dissoudre dans un solvant, mais qui restent à leur état initial en absence de celui-ci. Par poudrette de caoutchouc récupéré, on comprend une poudrette qui a été obtenue en broyant des pneus déjà vulcanisés, qu'ils soient usagés ou neufs. Le plus souvent les poudrettes de caoutchouc sont issues d'un broyage ou d'une micronisation de compositions de caoutchouc cuites déjà utilisées pour une première application, par exemple en pneumatique, elles sont un produit de recyclage des matériaux. La poudrette est donc de préférence constituée d'une composition à base d'au moins un élastomère et une charge. Par étape de frittage de ce mélange, on comprend une mise en forme d'une quantité prédéterminée du mélange susmentionné par chauffage à une température inférieure à celle de vulcanisation des grains la composant et en même temps de mise en pression de cette quantité de poudrette dans la cavité d'un moule.

Afin de garantir l'uniformité des propriétés de l'objet dans la masse de celui-ci, il est important de réaliser un mélange très homogène des particules le composant avant le frittage. On réalise ensuite un frittage en phase solide du mélange de grains de poudrette de caoutchouc et de ceux de soluté. On obtient ainsi une agglutination par chauffage à une température inférieure à celle de vulcanisation du caoutchouc et une mise en pression des grains de mélange qui restent à l'état solide tout le long du frittage. Le chauffage et la mise en pression des grains du mélange créent un aggloméré fritté de ces grains. Ainsi, la compression crée un rapprochement physique des grains et le chauffage favorise la mobilité moléculaire et donc ce rapprochement. Sous l'effet de la température, la mobilité moléculaire augmente et fait naitre une interaction intermoléculaire du type des forces van der Waals, ce qui crée une liaison physique résistante ou physisorption entre les molécules des différents grains.

On obtient ainsi un objet dont la forme et les dimensions sont très précises, car elles sont définies par celles de la cavité de frittage du moule, et dont la densité est contrôlée, celle-ci étant en lien direct avec la pression de compactage du mélange. On notera en outre que, en absence de traitement avec un solvant, c'est-à-dire lorsque l'on considère un objet (ou une portion d'objet) qui aura été obtenu par frittage, conformément à l'invention, d'un mélange de poudrette de caoutchouc et de particules solides de soluté, mais qui n'aura pas encore été exposé au solvant, alors on obtient un objet solide beaucoup plus rigide que si ledit objet avait été constitué de particules de poudrette de caoutchouc seules. En effet, les particules solides de soluté sont intrinsèquement plus rigides que les particules de poudrette de caoutchouc, puisque lesdites particules solides de soluté présentent une raideur, notamment une raideur à la compression, supérieure à celle desdites particules de poudrette de caoutchouc vulcanisé, qui sont par nature très élastiques. Par conséquent, un objet compacté obtenu par le frittage d'un mélange contenant, en sus des particules de poudrette de caoutchouc, des particules de soluté rigides, encore non dissoutes, incorporées entre lesdites particules de poudrette de caoutchouc, présentera globalement, de manière avantageuse, une résistance à la déformation, et notamment une raideur à la compression, qui est bien supérieure à la résistance qu'aurait ce même objet s'il était obtenu par frittage d'un mélange qui contiendrait seulement des particules de poudrette de caoutchouc, sans inclusions de particules solides de soluté.

De préférence, on met en contact l'objet moulé avec un solvant de manière à dissoudre au moins une partie des particules dudit soluté. Cela permet de dissoudre une partie ou la totalité du soluté et d'obtenir une porosité partielle ou totale de l'objet moulé.

Avantageusement, les particules de poudrette ont une taille moyenne inférieure à 800µm.

Il a été constaté, lors des tests effectués en laboratoire que, lorsque la taille des grains de la poudrette de caoutchouc ne dépasse pas 800µm, le frittage peut avoir lieu sans ajout d'additif de vulcanisation ou de tout autre liant ou additif de liaison entre les grains. On arrive ainsi à obtenir un objet avec de très bonnes propriétés de tenue mécanique et avec une densité et une composition chimique contrôlées.

De préférence, la taille moyenne des particules du soluté est égale ou inférieure à celle des particules de poudrette. Cela permet, dans l'hypothèse d'une répartition homogène des deux types de particules dans la cavité de moulage, de mieux maîtriser la répartition des pores dans le volume de l'objet.

Avantageusement, la proportion de soluté dans le mélange est comprise entre 1 et 80% de la masse totale du mélange. Ainsi, les tests effectués en laboratoire ont montré qu'au-delà de ces limites on obtient soit un objet friable de par la décohésion des particules le composant, soit un objet dont les propriétés sont trop proches de celles d'un objet fritté à base de poudrette de caoutchouc récupéré seule.

De préférence, ledit solvant est l'eau et ledit soluté est choisi parmi : le sel, un saccharide (ou un sucre ou un dérivé quelconque de sucre soluble dans l'eau), une protéine soluble dans l'eau ou un polymère soluble dans l'eau.

On pourrait en effet utiliser différents solvants de l'état de la technique, tels les solvants organiques, etc. On préfère toutefois l'eau car il s'agit d'un produit économique et écologique et qui accepte une grande variété de solutés en poudre compatibles avec le frittage, et solubles dans l'eau, tels le sel, un saccharide, une protéine soluble dans l'eau ou un polymère soluble dans l'eau. De surcroît, de par la présence de l'eau dans le milieu ambiant, par exemple sur une route, le contact d'un bandage de roue avec une route mouillée permet de dissoudre le soluté, par exemple le sel, qui se trouve sur la surface externe d'un bandage de roue et modifier ainsi ses propriétés d'adhérence.

Avantageusement, l'objet moulé de l'étape b) obtenu avec un premier mélange de l'étape a) est placé dans un deuxième moule dans lequel on introduit un deuxième mélange de particules de poudrette et dudit soluté ayant une composition différente de celle du premier mélange et on réalise ensuite un nouvel objet moulé sur la base des deux mélanges.

Cette solution permet d'obtenir des objets frittés avec une répartition choisie de leurs propriétés physiques dans le volume de l'objet. On peut ainsi par exemple obtenir un objet avec un noyau rigide et une enveloppe plus souple.

De préférence, le mélange est introduit dans le moule et est soumis à une température nominale comprise entre 100°C et 150°C et à une pression nominale comprise entre 20 et 200 bars pendant une période de temps comprise entre 2 et 15 minutes. Ces paramètres de procédé permettent d'obtenir des objets frittés à partir de la poudrette de caoutchouc seule ayant les meilleures propriétés mécaniques.

Les meilleurs résultats ont été obtenus avec de la poudrette introduite dans le moule et soumise à une température nominale de 120°C, à une pression de 100 bars pendant une durée de 10 minutes.

Avantageusement, le procédé de l'invention comprend une étape de refroidissement de l'objet moulé dans le moule. Il a été constaté que le démoulage de l'objet après refroidissement de celui-ci à une température nettement inférieure à celle de frittage assure une meilleure stabilité dimensionnelle de l'objet qui ne présente aucun phénomène de gonflage après démoulage. Avantageusement, l'étape de refroidissement de l'objet dans le moule a lieu à une température inférieure à 50°C et de préférence à la température ambiante.

L'objectif de l'invention est également atteint avec un objet réalisé à base de poudrette de caoutchouc récupéré comprenant une proportion comprise entre 1 et 80 %, en masse, de particules d'un soluté.

De préférence, l'objet selon l'invention est réalisé à base de poudrette de caoutchouc récupéré sans ajout d'additif de liaison entre les particules de poudrette dont la taille moyenne n'excède pas 800µm.

Dans une variante de réalisation, l'objet de l'invention comporte une première partie compacte, au sein de laquelle les particules solides de soluté n'ont pas été exposées au solvant et n'ont donc pas été dissoutes par ledit solvant, et qui est donc de préférence pleine, et une deuxième partie sous forme de mousse, au sein de laquelle au moins une partie des particules de soluté ont été dissoutes par le solvant, créant ainsi des cavités au sein de ladite partie de l'objet.

Dans une autre variante de réalisation, l'objet de l'invention est constitué d'une mousse.

L'invention sera mieux comprise grâce à la suite de la description, qui s'appuie sur les figures suivantes :
- les figures 1a à 1e représentent, par des vues en coupe, les différentes étapes du procédé de l'invention ;
- les figures 2a à 2f illustrent des vues à échelle agrandie des parties d'objets frittés réalisés à base de différents mélanges de poudrette de caoutchouc récupéré et de particules de soluté.

Sur les différentes figures, les éléments identiques ou similaires portent la même référence. Leur description n'est donc pas systématiquement reprise.

Le procédé de l'invention a pour but un objet réalisé à partir de poudrette de caoutchouc récupéré en mélange avec des particules de soluté. La poudrette est obtenue à partir de caoutchouc réticulé ou vulcanisé, elle étant obtenue par broyage d'un pneumatique cuit, usagé ou pas. Un tel pneumatique est choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention. La poudrette utilisée est celle obtenue par broyage d'une partie préalablement détachée du pneumatique, par exemple à partir d'une bande de roulement, des flancs, etc. ou elle est obtenue en broyant le pneumatique en entier. Dans ce dernier cas, elle est débarrassée de résidus textiles ou métalliques.

La composition de la poudrette est donc réalisée à base d'au moins un élastomère et une charge. A titre d'exemples de charges connues comme renforçantes par l'homme du métier, on citera notamment du noir de carbone ou une charge inorganique renforçante telle que la silice ou l'alumine en présence d'un agent de couplage, ou leurs mélanges. La poudrette peut également comprendre tous les ingrédients usuellement utilisés dans les compositions de caoutchouc tels que les plastifiants, les antioxydants, les additifs de vulcanisations, etc.

Les poudrettes sont de simples broyats de caoutchouc, sans autre traitement. Le broyage jusqu'au stade de poudrette de taille déterminée peut être réalisé par différentes technologies, notamment les technologies de micronisation cryogénique à impact qui permettent l'obtention de particules de faible taille sur des matériaux caoutchouc. Des équipements commerciaux tels que les broyeurs CUM150 de la société Netzsch ou CW250 de la société Alpine peuvent être utilisés. Des étapes de tamisage suivent le broyage afin de sélectionner des particules ayant une taille moyenne prédéterminée.

Selon l'invention, on réalise un objet à partir de particules de poudrette de caoutchouc mélangées avec des particules d'un soluté par frittage sans ajout d'additif de vulcanisation ou de liant entre les particules du mélange. Selon un aspect avantageux de l'invention, dont la taille moyenne des particules qui composent le mélange, ici de préférence avant le compactage dudit mélange lors du frittage, est inférieure ou égale à 800 µm.

Dans un mode préféré de réalisation de l'invention, le soluté est du sel qui est composé essentiellement de chlorure de sodium. Le sel utilisé est disponible dans le commerce, par exemple du type du sel utilisé pour le déneigement, broyé lavé séché et tamisé. Les particules utilisées ont une taille moyenne (D50) inférieure ou égale à 800 µm.

Une fois sélectionnée la taille souhaitée des particules en caoutchouc et des particules de soluté on procède au mélangeage des deux matériaux. Une condition essentielle pour la maîtrise des propriétés de l'objet à obtenir ultérieurement par frittage est l'homogénéité du mélange utilisé. Pour cela, on place la quantité voulue de particules de poudrette et celle de particules de sel dans un récipient placé ensuite dans le panier d'un mélangeur dynamique tridimensionnel, tel un mélangeur TURBULA^{®} de la société Willy A. Bachofen AG Maschinenfabrik. Le récipient contenant le mélange de particules est soumis à un mouvement tridimensionnel appliquant continuellement aux particules des mouvements opposés et rythmiques de rotation, translation et inversion selon la théorie géométrique de Schatz, ce qui a pour résultat un mélange très homogène des deux types de particules.

Le mélange obtenu est introduit dans un moule dans lequel on lui applique une pression pour compacter la poudrette comprise entre 20 et 200 bars, de préférence 100 bars et l'on amène à une température comprise entre 100 et 150°C, de préférence 120°C pendant une durée comprise entre 2 et 15 minutes, de préférence 10 minutes. On obtient ainsi un objet fritté ayant les dimensions souhaitées et de bonnes propriétés mécaniques, mais plus rigide qu'un objet réalisé en poudrette de caoutchouc récupéré seule.

La taille moyenne des particules du mélange de l'invention mélange de poudrette de caoutchouc et de particules de soluté est inférieure à 800 µm. Il a été constaté de manière surprenante, qu'en utilisant des particules dont la taille ne dépassait pas 800 µm, les objets obtenus par frittage du mélange de poudrettes seul, sans liant ou agent de vulcanisation, présentent d'excellentes propriétés mécaniques. En effet, le frittage est effectué par une compression et une mise en température pendant une durée prédéterminée dans un moule des particules de mélange de poudrettes. On obtient ainsi par frittage un objet dont la forme et les dimensions sont proches des dimensions souhaitées. Le frittage mène à une agglutination des particules due d'une part au rapprochement des particules mises en compression et à la mobilité moléculaire favorisée par la mise en température de celles-ci, ce qui créé des liaisons du type forces Van der Waals entre les particules, ces liaisons étant d'autant plus fortes que la surface spécifique des particules étant élevée.

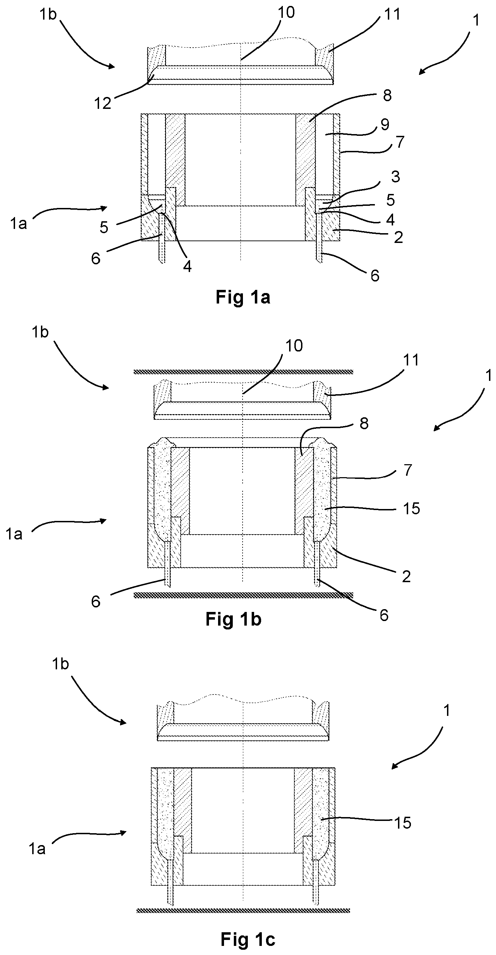

Les figures 1a à 1e illustrent différentes étapes de l'opération de fabrication d'un objet en mélange de poudrette de caoutchouc et de particules de sel à l'intérieur d'un moule 1 introduit dans une presse de frittage (non représentée).

Dans l'exemple illustré, le moule 1 comprend une partie fixe 1a comprenant une base 2 de forme générale tubulaire d'axe central 10 comportant une cavité inférieure 3 de forme générale annulaire coaxiale à l'axe 10. Au fond de la cavité 3 sont pratiqués 2 orifices 4 cylindriques de section circulaire et d'axe longitudinal 5 parallèle à l'axe central 10. Dans chaque orifice 5 est agencé à possibilité de coulissement une tige 6 ayant pour fonction d'éjecter l'objet fritté. Les tiges 6 sont mobiles entre une position initiale au fond de la cavité 3, dans laquelle elles obturent les orifices 4, et une deuxième position quand elles se déplacent vers le haut sous la poussée d'un vérin pour éjecter l'objet fritté. La base 2 du moule supporte en sa partie supérieure deux pièces de forme annulaire, une pièce externe 7 et une pièce interne 8 coaxiales à l'axe 10. Les pièces 7 et 8 définissent entre elles une enceinte tubulaire 9 qui communique directement avec la cavité inférieure 3 du moule.

Le moule 1 comprend également une partie mobile 1b située au-dessus de la partie fixe 1a et qui est amenée à se déplacer en translation par rapport à celle-ci. La partie mobile 1b comporte un piston 11 tubulaire d'axe coaxial à l'axe 10. Le piston 11 est relié à la tige d'un vérin, par exemple un vérin hydraulique (non représenté), qu'il entraîne en un mouvement de coulissement parallèle à l'axe 10 à l'intérieur de la partie fixe, plus particulièrement de l'enceinte tubulaire 9. La partie d'attaque du piston 11 comprend une cavité supérieure 12 dont la forme et les dimensions sont en relation avec celles de la cavité inférieure 3 et définissent ensemble une cavité de frittage qui correspond au volume de l'objet qui sera obtenu par frittage. Les différentes pièces composant le moule 1 sont des pièces métalliques rigides, réalisées par exemple en acier.

On va décrire dans ce qui suit les différentes étapes de fabrication d'un objet fritté en mélange de poudrette de caoutchouc récupéré et de sel, appelé dans ce qui suit mélange de poudrettes. La figure 1a illustre le moule 1 ouvert, à l'état initial, avant de commencer l'opération de frittage. La figure 1b illustre le moule 1 à la fin de l'opération de remplissage en mélange de poudrettes 15 de la cavité inférieure 3 et de l'enceinte tubulaire 9, le moule étant toujours ouvert. La figure 1c illustre le moule 1 rempli en mélange de poudrettes, mais dans lequel on a enlevé le surplus de mélange issu du remplissage de l'étape précédente, de manière à ce que le mélange de poudrettes ne dépasse pas de la face supérieure de la partie inférieure 1a du moule.

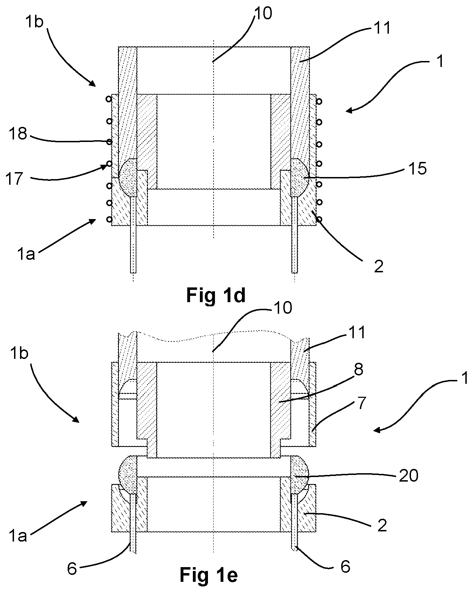

La figure 1d illustre l'étape de frittage qui consiste en un compactage et une mise en température du mélange de poudrettes. Plus précisément, le piston 11 descend à l'intérieur de l'enceinte tubulaire 9 et comprime le mélange de poudrettes 15 jusqu'à atteindre une valeur nominale prédéterminée de la pression à l'intérieur de la cavité de frittage, cette valeur étant comprise entre 20 et 200 bars. Le moule 1 comprend un dispositif de régulation de la température 17, comportant, par exemple, un serpentin tubulaire 18 dans lequel circule un fluide caloporteur et qui entoure la partie inférieure 1a du moule 1 (illustré seulement en fig. 1d). Le dispositif de régulation de la température est relié à une unité de contrôle qui permet l'arrivée de fluide à une température prédéterminée à l'intérieur du serpentin 18. Ainsi, lors du frittage, l'unité de contrôle commande l'envoi de fluide caloporteur préalablement réchauffé de manière à faire monter la température de la cavité de frittage à la température nominale de frittage qui est comprise entre 100 et 150°C. La pression est maintenue dans la cavité de frittage pendant une durée prédéterminée afin de permettre à l'air inclus dans le mélange de poudrettes et emprisonné dans la cavité de frittage de s'échapper. Cette durée est comprise entre 2 et 15 minutes.

A la fin de l'opération de frittage, mais avant l'ouverture du moule, on procède au refroidissement de l'objet fritté à une température inférieure à 80°C et de préférence inférieure à 50°C et encore plus préférentiellement à un refroidissement à la température ambiante. Ce refroidissement se fait avantageusement en commandant une circulation de fluide caloporteur refroidi dans le serpentin 18 pendant une durée de refroidissement comprise entre 5 et 20 minutes. Il a été constaté qu'un tel refroidissement permet une maîtrise de la géométrie finale de l'objet fritté et qu'il n'y avait donc pas de gonflement de l'objet après démoulage. Le refroidissement permet de prolonger la durée du séjour sous pression de l'objet fritté, ce qui assure une cohésion complète des grains du mélange de poudrettes et évite toute porosité liée à un taux d'inclusion d'air non souhaité, tout en évitant tout retour élastique des particules séparées par des pores trop importants ou trop nombreux. De surcroît, en refroidissant on évite toute fragilité à chaud de l'objet fritté, la résistance mécanique de l'objet fritté refroidi étant optimale et stabilisée.

La figure 1e illustre l'étape de démoulage de l'objet fritté, qui est un bandage de pneumatique 20 dans l'exemple représenté. Pour procéder au démoulage, on fait coulisser le parallèlement à l'axe 10 le piston 11 et les pièces externe 7 et interne 8 par rapport à a base 2 et on actionne les tiges d'éjection 6 qui poussent le bandage 20 à l'extérieur de la cavité de frittage. Le bandage de pneumatique 20 obtenu par frittage est ensuite retiré du moule 1.

Dans un mode préféré de réalisation de l'invention, la poudrette de caoutchouc récupéré présente une taille moyenne de particules (D50) comprise entre 200 et 800 µm, préférentiellement d'environ 400 µm et la poudrette de sel une taille égale à celle des particules de poudrette de caoutchouc.

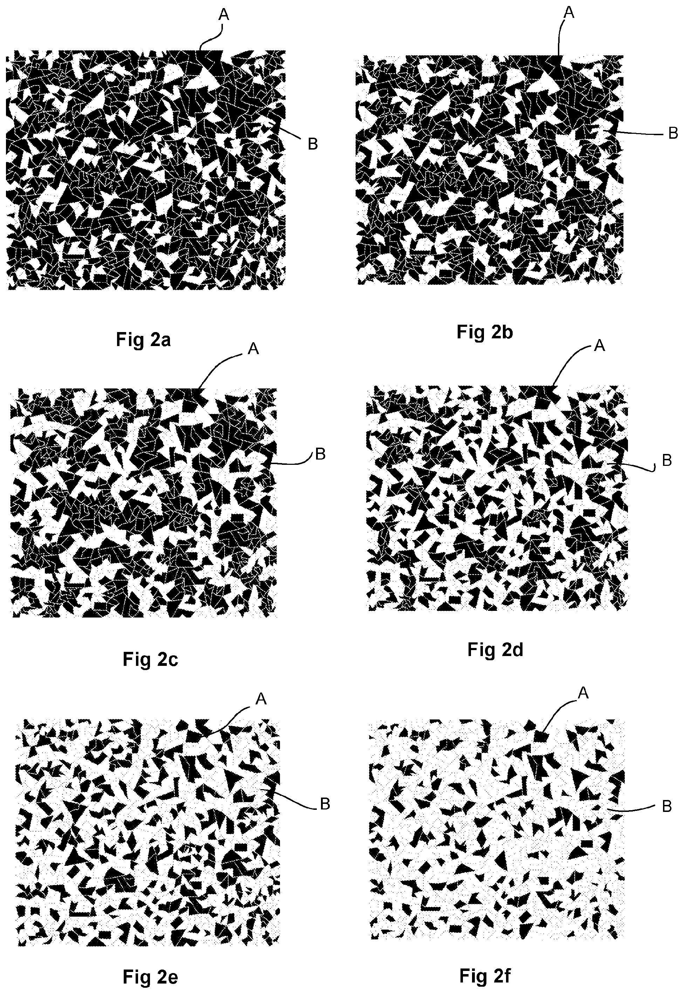

Les figures 2a à 2f illustrent des vues à échelle agrandie des parties d'objets frittés réalisés à base de différents mélanges de poudrette de caoutchouc récupéré A et de particules de sel B, ici préférentiellement de tailles sensiblement identiques. Ainsi, le mélange de la figure 2a est composé de 76% (en volume) de particules de poudrette de caoutchouc A et de 24% (en volume) de particules de sel B. Le mélange de la figure 2b comprend 65% (en volume) de particules de poudrette de caoutchouc A et de 35 % (en volume) de particules de sel B. Le mélange de la figure 2c est composé de 60% (en volume) de particules de poudrette de caoutchouc A et de 40% (en volume) de particules de sel B. Le mélange de la figure 2d comprend 50% (en volume) de particules de poudrette de caoutchouc A et de 50 % (en volume) de particules de sel B. La figure 2e illustre un mélange composé de 38% (en volume) de particules de poudrette de caoutchouc A et de 62 % (en volume) de particules de sel B celui illustré à la figure 2f un mélange de 24% (en volume) de particules de poudrette de caoutchouc A et de 76% (en volume) de particules de sel B.

Dans un mode préféré de réalisation de l'invention, les objets obtenus par frittage d'un mélange de poudrette et de sel sont immergés dans un récipient contenant de l'eau, ce qui permet d'obtenir une dissolution des particules de sel dans l'eau, dissolution qui crée des cavités dans l'objet. La taille des cavités est donnée par la taille des particules de sel et leur volume par la proportion du sel dans le volume de l'objet. On obtient ainsi une mousse de caoutchouc. Selon la taille et la quantité des particules de sel dans le mélange de poudrettes, on obtient une mousse à cellules fermées ou à cellules ouvertes.

Dans une variante de l'invention, on réalise un objet par deux frittages successifs de dans deux moules différents de deux mélanges différents, le deuxième étant un surmoulage du premier. Ainsi, on réalise un premier objet fritté dans un moule d'un premier mélange, selon les étapes illustrées aux figures 1a à 1e, par exemple un mélange comportant majoritairement du caoutchouc, du type illustré à la figure 2a. On introduit ensuite le bandage 20 dans un deuxième moule de plus grand diamètre extérieur et on répète les mêmes opérations avec un deuxième mélange de composition différente, par exemple comportant majoritairement du sel, du type illustré à la figure 2e. On obtient ainsi un objet fritté en deux mélanges, le premier à l'intérieur et le deuxième à l'extérieur. Cet objet est par exemple un nouveau bandage de pneumatique en deux matériaux différents. Un tel objet peut ensuite être immergé dans un récipient d'eau pour obtenir un bandage de pneumatique rigide comportant une couche externe sous forme de mousse. De par sa nature poreuse en surface, un tel bandage présente de bonnes propriétés d'adhérence sur la route.

Dans une variante, qui est applicable que l'objet fritté soit obtenu par un frittage unique d'un mélange unique ou par frittages successifs (en surmoulage les uns des autres) de mélanges de compositions différentes, on pourra éliminer la dernière étape consistant à immerger l'objet dans un récipient d'eau et procéder directement au montage de l'objet fritté, ici le bandage, sur une jante. La porosité sera alors obtenue en surface au contact de l'humidité ambiante ou au contact de l'eau existante sur la route, c'est-à-dire que la dernière étape de dissolution de particules de soluté par mise en contact de l'objet fritté avec le solvant adéquat sera en pratique mise en œuvre du fait de l'utilisation dudit objet fritté.

On notera que, avantageusement, l'invention permet de créer des objets frittés, et notamment des bandages pour pneumatiques, capables d'auto-régénération, en ceci que, à un instant initial donné, par exemple dans un état initial qui résulte du frittage et d'une première exposition au solvant selon l'invention, l'objet comprend d'une part une partie compacte, formant un noyau plein, et au sein de laquelle les particules solides de soluté n'ont pas été exposées au solvant et n'ont donc pas été dissoutes par ledit solvant, et d'autre part une partie sous forme de mousse, formant une enveloppe périphérique au sein de laquelle au moins une partie des particules de soluté ont été exposées au solvant et dissoutes par le solvant, et que, au fur et à mesure de l'usure de l'objet qui se produit à partir de cet instant initial, et plus particulièrement au fur et à mesure de l'abrasion de la couche superficielle de l'enveloppe formée de mousse, le noyau sous-jacent est progressivement exposé au solvant, qui pénètre ainsi les couches périphériques dudit noyau, contiguës à l'enveloppe de mousse initiale, et transforme donc, par dissolution des particules de soluté dans lesdites couches périphériques du noyau, la portion correspondante du noyau, initialement compacte, en mousse. De la sorte, l'enveloppe de mousse est régénérée, au fur et à mesure de son usure, en gagnant peu à peu sur le noyau, qui va quant à lui en se rétrécissant peu à peu par rapport à la taille qu'il possédait à l'instant initial susmentionné.

Que l'exposition de l'objet fritté au solvant intervienne directement par construction, au cours du processus de fabrication dudit objet avant utilisation dudit objet, ou bien, de manière évolutive, au cours de l'utilisation dudit objet, la profondeur de pénétration du solvant dans l'objet fritté, considérée depuis la surface de l'objet, et qui délimite la frontière entre le noyau compact et l'enveloppe en mousse, dépendra notamment de la proportion en volume des particules solides de soluté au sein du mélange, et donc de la capacité du solvant à percoler à travers le mélange compacté. En effet, plus la proportion de particules de soluté sera élevée, plus les îlots de particules de soluté communiqueront entre eux en formant des passages à travers les îlots de particules de caoutchouc, ce qui facilitera la pénétration du solvant et la dissolution des particules de soluté, et tendra donc à accroître la profondeur de pénétration. A l'inverse, un mélange plus dense en particules de caoutchouc, c'est-à-dire contenant une proportion plus élevée de particules de caoutchouc, aura tendance à isoler les îlots de particules de soluté les uns des autres, et donc à freiner la percolation du solvant et donc la dissolution desdites particules de soluté, ce qui réduira la profondeur de pénétration, et donc l'épaisseur de la couche de mousse, en préservant davantage l'intégrité des couches plus profondes.

Parmi les utilisations des objets frittés obtenus avec le procédé de l'invention, on cite : des bandages pour pneumatiques, des roues ou roulettes pour trottinettes, rollers, gyropodes, etc., des semelles pour chaussures, des revêtements de sol ou des sous-couches pour ceux-ci, etc.

Bien entendu, on pourrait apporter à l'invention de nombreuses modifications sans sortir du cadre de celle-ci, tel que défini dans les revendications.

Ainsi, on pourrait utiliser d'autres types de solutés et leurs solvants associés, par exemple un matériau thermoplastique du type polystyrène à résistance élevée aux chocs (HIPS) en tant que soluté associé au limonène, en particulier au d-limonène, comme solvant.

Ainsi, on peut utiliser pour les besoins de l'invention une poudrette de caoutchouc récupéré obtenue par un autre procédé, par exemple issue d'une micronisation à l'aide du dioxyde de carbone supercritique, telle que décrite dans la demande de brevet WO 2017/097859. On peut également utiliser une poudrette de caoutchouc récupéré qui présente des inclusions métalliques ou textiles.

On peut également immerger l'objet fritté dans un bain à ultrasons afin d'accélérer la dissolution du soluté par le solvant.

## Revendications

1. Procédé de fabrication d'objet en poudrette de caoutchouc récupéré, **caractérisé en ce que** :
a) on mélange des particules de poudrette avec des particules d'un soluté ;
b) on réalise un objet moulé par frittage du mélange de l'étape a) seul dans un moule dans des conditions de température et de pression prédéterminées ;
c) on met en contact l'objet moulé avec un solvant de manière à dissoudre au moins une partie des particules dudit soluté.

2. Procédé selon l'une des revendications 1, **caractérisé en ce que** les particules de poudrette ont une taille moyenne inférieure à 800µm.

3. Procédé selon l'une des revendications précédentes, **caractérisé en ce que** la taille moyenne des particules du soluté est égale ou inférieure à celle des particules de poudrette.

4. Procédé selon l'une des revendications précédentes, **caractérisé en ce que** la proportion de soluté dans le mélange est comprise entre 1 et 80% de la masse totale du mélange.

5. Procédé selon l'une des revendications précédentes, **caractérisé en ce que** ledit solvant est l'eau et ledit soluté est choisi parmi : le sel, un saccharide, une protéine soluble dans l'eau ou un polymère soluble dans l'eau.

6. Procédé selon l'une des revendications précédentes, **caractérisé en ce que** l'objet moulé de l'étape b) obtenu avec un premier mélange de l'étape a) est placé dans un deuxième moule dans lequel on introduit un deuxième mélange de particules de poudrette et dudit soluté ayant une composition différente de celle du premier mélange et on réalise ensuite un nouvel objet moulé sur la base des deux mélanges.

7. Procédé selon l'une des revendications précédentes, **caractérisé en ce que** le mélange est introduit dans le moule et est soumis à une température nominale comprise entre 100°C et 150°C et à une pression nominale comprise entre 20 et 200 bars pendant une période de temps comprise entre 2 et 15 minutes.

8. Procédé selon la revendication 7, **caractérisé en ce que** le mélange est introduit dans le moule et est soumis à une température nominale de 120°C, à une pression de 100 bars pendant une durée de 10 minutes.

9. Procédé selon l'une des revendications précédentes, **caractérisé en ce qu'**il comprend une étape de refroidissement de l'objet moulé dans le moule.

10. Procédé selon l'une des revendications précédentes, **caractérisé en ce que** ledit solvant est du limonène et ledit soluté est un matériau thermoplastique du type polystyrène à résistance élevée aux chocs.

11. Objet obtenu par un procédé selon l'une des revendications 1 à 10, comportant des particules de poudrette de caoutchouc, des particules de soluté rigides non encore dissoutes et incorporées entre lesdites particules de poudrette de caoutchouc.

12. Objet selon la revendication 11, **caractérisé en ce qu'**il est réalisé à base de poudrette de caoutchouc récupéré sans ajout d'additif de liaison entre les particules de poudrette dont la taille moyenne n'excède pas 800µm.

13. Objet selon l'une des revendications 11 ou 12, **caractérisé en ce qu'**il comporte une première partie compacte, au sein de laquelle les particules solides de soluté n'ont pas été exposées au solvant et n'ont donc pas été dissoutes par ledit solvant, et une deuxième partie sous forme de mousse, au sein de laquelle au moins une partie des particules de soluté ont été dissoutes par le solvant.

14. Objet selon l'une des revendications 11 ou 12, **caractérisé en ce qu'**il est constitué d'une mousse.

15. Objet selon l'une des revendications 11 à 14 **caractérisé en ce qu'**il constitue un bandage pneumatique, une roulette, une semelle pour chaussure, ou un revêtement de sol.

## Patentansprüche

1. Verfahren zur Herstellung eines Gegenstands aus wiederverwertetem Kautschukgranulat, **gekennzeichnet durch**:
a) Mischen von Granulatpartikeln mit Partikeln eines löslichen Stoffs;
b) Erzeugen eines geformten Gegenstands durch Sintern der Mischung aus Schritt a) allein in einer Form unter vorbestimmten Temperatur- und Druckbedingungen;
(c) Kontaktieren des geformten Gegenstands mit einem Lösungsmittel, um mindestens einen Teil der Partikel des löslichen Stoffes zu lösen.

2. Verfahren nach Anspruch 1, **dadurch gekennzeichnet, dass** die Granulatpartikel eine mittlere Größe von weniger als 800 µm aufweisen.

3. Verfahren nach einem der vorhergehenden Ansprüche, **dadurch gekennzeichnet, dass** die mittlere Partikelgröße des löslichen Stoffes gleich oder kleiner als diejenige der Granulatpartikel ist.

4. Verfahren nach einem der vorhergehenden Ansprüche, **dadurch gekennzeichnet, dass** der Anteil an löslichem Stoff in der Mischung zwischen 1 und 80 % der Gesamtmasse der Mischung liegt.

5. Verfahren nach einem der vorhergehenden Ansprüche, **dadurch gekennzeichnet, dass** das Lösungsmittel Wasser ist und der lösliche Stoff ausgewählt ist aus Salz, Saccharid, wasserlöslichem Protein oder wasserlöslichem Polymer.

6. Verfahren nach einem der vorhergehenden Ansprüche, **dadurch gekennzeichnet, dass** der mit einer ersten Mischung aus Schritt a) erhaltene geformte Gegenstand aus Schritt b) in einer zweiten Form platziert wird, in die eine zweite Mischung aus Granulatpartikeln und dem löslichen Stoff mit einer anderen Zusammensetzung als derjenigen der ersten Mischung eingebracht wird und dann basierend auf den beiden Mischungen ein neuer geformter Gegenstand erzeugt wird.

7. Verfahren nach einem der vorhergehenden Ansprüche, **dadurch gekennzeichnet, dass** die Mischung in die Form eingebracht wird und einer Nenntemperatur zwischen 100 °C und 150 °C und einem Nenndruck zwischen 20 und 200 bar für einen Zeitraum zwischen 2 und 15 Minuten ausgesetzt wird.

8. Verfahren nach Anspruch 7, **dadurch gekennzeichnet, dass** die Mischung in die Form eingebracht und einer Nenntemperatur von 120 °C bei einem Druck von 100 bar während eines Zeitraums von 10 Minuten unterzogen wird.

9. Verfahren nach einem der vorhergehenden Ansprüche, **dadurch gekennzeichnet, dass** es einen Schritt des Abkühlens des geformten Gegenstands in der Form umfasst.

10. Verfahren nach einem der vorhergehenden Ansprüche, **dadurch gekennzeichnet, dass** das Lösungsmittel Limonen ist und der löslichen Stoff ein thermoplastisches Material vom Typ hochschlagfestes Polystyrol ist.

11. Gegenstand, erhalten durch ein Verfahren nach einem der Ansprüche 1 bis 10, umfassend Kautschukgranulatpartikel, starre Partikel des noch nicht löslichen Stoffs, und wobei diese zwischen die Kautschukgranulatpartikel eingearbeitet sind.

12. Gegenstand nach Anspruch 11, **dadurch gekennzeichnet, dass** er aus wiederverwertetem Kautschukgranulat erzeugt ist, ohne dass zwischen den Granulatpartikeln, deren mittlere Größe 800 µm nicht überschreitet, ein Bindungsadditiv zugesetzt wird.

13. Gegenstand nach einem der Ansprüche 11 oder 12, **dadurch gekennzeichnet, dass** er einen ersten kompakten Teil, in dem die festen Partikel des löslichen Stoffs nicht dem Lösungsmittel ausgesetzt wurden und daher nicht durch das genannte Lösungsmittel gelöst wurden, und einen zweiten Teil in Form eines Schaums umfasst, in dem mindestens ein Teil der Partikel des löslichen Stoffs durch das Lösungsmittel gelöst worden ist.

14. Gegenstand nach einem der Ansprüche 11 oder 12, **dadurch gekennzeichnet, dass** er aus einem Schaum zusammengesetzt ist.

15. Gegenstand nach einem der Ansprüche 11 bis 14, **dadurch gekennzeichnet, dass** er einen Luftreifen, eine Rolle/ein Rad, eine Schuhsohle oder einen Bodenbelag darstellt.

## Claims

1. Process for manufacturing an article made of recovered rubber crumb, **characterized in that**:
a) crumb particles are mixed with particles of a solute;
b) a moulded article is produced by sintering the mixture from step a) alone in a mould under predetermined temperature and pressure conditions;
c) the moulded article is brought into contact with a solvent so as to dissolve at least one portion of the particles of said solute.

2. Process according to Claim 1, **characterized in that** the crumb particles have an average size of less than 800 µm.

3. Process according to either of the preceding claims, **characterized in that** the average size of the particles of the solute is equal to or less than that of the crumb particles.

4. Process according to one of the preceding claims, **characterized in that** the proportion of solute in the mixture is between 1% and 80% of the total mass of the mixture.

5. Process according to one of the preceding claims, **characterized in that** said solvent is water and said solute is selected from: salt, a saccharide, a water-soluble protein or a water-soluble polymer.

6. Process according to one of the preceding claims, **characterized in that** the moulded article from step b) obtained with a first mixture from step a) is placed in a second mould, introduced into which is a second mixture of crumb particles and said solute having a composition different from that of the first mixture and a new moulded article is then produced from the two mixtures.

7. Process according to one of the preceding claims, **characterized in that** the mixture is introduced into the mould and is subjected to a nominal temperature of between 100°C and 150°C and to a nominal pressure of between 20 and 200 bar for a time of between 2 and 15 minutes.

8. Process according to Claim 7, **characterized in that** the mixture is introduced into the mould and is subjected to a nominal temperature of 120°C, at a pressure of 100 bar for a period of 10 minutes.

9. Process according to one of the preceding claims, **characterized in that** it comprises a step of cooling the moulded article in the mould.

10. Process according to one of the preceding claims, **characterized in that** said solvent is limonene and said solute is a thermoplastic material of high impact strength polystyrene type.

11. Article obtained by a process according to one of Claims 1 to 10, comprising rubber crumb particles, and rigid solute particles that are not yet dissolved and are incorporated between said rubber crumb particles.

12. Article according to Claim 11, **characterized in that** it is produced from recovered rubber crumb without the addition of a binding additive between the crumb particles, the average size of which does not exceed 800 µm.

13. Article according to either of Claims 11 and 12, **characterized in that** it comprises a first compact part, within which the solid particles of solute have not been exposed to the solvent and have therefore not been dissolved by said solvent, and a second part in the form of a foam, within which at least one portion of the solute particles have been dissolved by the solvent.

14. Article according to either of Claims 11 and 12, **characterized in that** it consists of a foam.

15. Article according to one of Claims 11 to 14, **characterized in that** it constitutes a pneumatic tyre, a caster, a sole for a shoe, or a floor covering.
